# FASCICULE DE BREVET EUROPEEN

(11) **EP 3 400 158 B1**
(45) Date de publication et mention de la délivrance du brevet: **22.04.2020**
(21) Numéro de dépôt: 16831899.6
(22) Date de dépôt: 22.12.2016
(51) Int. Cl.: B60W 50/14, B60W 30/14, G05D 1/00

(54) **PROCÉDÉ DE PILOTAGE D'UN SYSTÈME AUTOMATISE D'ASSISTANCE A LA CONDUITE D'UN VÉHICULE AUTOMOBILE**
VERFAHREN ZUM STEUERN EINES AUTOMATISIERTEN FAHRERASSISTENZSYSTEM EINES KRAFTFAHRZEUGS
METHOD FOR CONTROLLING AN AUTOMATED DRIVING ASSISTANCE SYSTEM OF A MOTOR VEHICLE

(30) Priorité: 07.01.2016 FR 1650096
(43) Date de publication de la demande: 14.11.2018
(73) Titulaire: PSA AUTOMOBILES S.A., 78300 Poissy (FR)
(72) Inventeur: FERON, Stephane, 92350 Le Plessis Robinson (FR); LAINE, Vincent, 78340 Les Clayes sous Bois (FR); TACCORI DUVERGEY, Celine, 92120 Montrouge (FR)
(74) Mandataire: Jeannin, Laurent Jean-Pierre
(86) Numéro de dépôt international: PCT/FR2016/053634
(87) Numéro de publication internationale: WO 2017/118789

(56) Documents cités:
- WO-A1-2016/120083
- DE-A1-102006 058 412
- DE-A1-102007 062 698
- DE-A1-102013 019 141

## Description

### Domaine de l'invention

La présente invention concerne d'une manière générale les systèmes d'assistance à la conduite dotés de plusieurs modes de conduite entièrement automatisée d'un véhicule automobile. Elle vise en particulier la problématique de la transition entre ces différents modes.

### Arrière-plan de l'invention

Les systèmes d'assistance à la conduite sont désormais largement répandus dans les véhicules automobiles récents et connaissent un développement rapide.

On connait ainsi depuis un certain nombre d'années les régulateurs de vitesse adaptatifs, mieux connus sous l'acronyme anglais ACC (pour « Adaptive Cruise Control »). Un tel mode d'assistance ajuste de manière automatique la vitesse afin de maintenir un intervalle de sécurité constant avec le véhicule précédant l'utilisateur à partir des informations recueillis sur ce véhicule (notamment la distance et la vitesse d'approche) à l'aide d'un ou plusieurs capteurs de type radar, lidar ou infrarouge.

On connaît également, notamment de la demande de brevet américaine US 2013/0096767, des systèmes dynamiques anti-franchissement involontaire de ligne. Ces derniers, désignés généralement sous les acronymes ALKA (pour « Active Lane Keep Assist »), LKAS (pour « Lane Keep Assistance System), ALA (pour « Active Lane Assist) ou encore ALC (pour « Active Lane Control ») détectent les lignes de marquages au sol à l'aide de capteurs et/ou de caméras optiques, et interviennent dynamiquement sur le véhicule lorsque ce dernier s'écarte de sa voie de circulation. Dans un tel cas de figure, le système d'assistance à la conduite va alors corriger automatiquement la direction du véhicule et/ou activer le freinage.

Plus récemment, des modes d'assistance à la conduite totalement autonomes ont vus le jour afin de soulager le conducteur dans des situations de trafic dense sur des routes à chaussées séparées où la vitesse du véhicule est réduite.

Tel est notamment le cas des modes d'assistance à la conduite en embouteillage (plus connus sous l'acronyme anglais TJC pour « Traffic Jam Chauffeur ») destinés à délester le conducteur dans des situations de trafic dense ou de bouchon (vitesse inférieure à 50/70 km/h) sur des routes à chaussées séparées (autoroutes et voies rapides).

En cas de dégradation du contexte environnemental de conduite nécessitant un retour dans le mode de conduite manuel, ces modes d'assistance de type TJC sont capables de maintenir un guidage entièrement automatisé du véhicule sur une période de transition assez longue d'une dizaine de secondes avant un retour vers le mode de conduite manuel, de sorte que le conducteur n'est pas tenu de garder les yeux fixés sur la route et peut vaquer à d'autres occupations (passage de communications téléphoniques, visionnage d'un film via le système d'info-divertissement du véhicule, lancement d'un jeu vidéo sur un ordinateur ou une tablette tactile, lecture d'un livre ou d'un magazine, etc.).

Enfin, dernièrement sont apparus des modes d'assistance à la conduite sur autoroute communément désignés par les acronymes HAD (pour « Highway Automated Driving ») ou AHDA (pour « Automatic Highway Driving Assist ») et aptes également à délester le conducteur sur des routes à chaussées séparées mais sans restrictions d'usage relatives à la vitesse du véhicule ou à la densité du trafic routier.

Dans un tel mode, le guidage entièrement automatisé ne peut être maintenu que sur une période de transition courte (comprise typiquement entre 1 et 3 secondes) en cas de dégradation du contexte de conduite nécessitant un retour en conduite manuelle. Il est donc indispensable que le conducteur maintienne en permanence un certain niveau d'attention sur la route afin d'être prêt à reprendre instantanément en mains le véhicule.

Certains véhicules sont ainsi désormais dotés d'un système d'assistance à la conduite proposant ces deux derniers modes complémentaires de conduite entièrement automatisée.

Toutefois, dans un tel cas de figure, les modalités de mises en oeuvre de ces deux modes demeurent totalement indépendantes l'une de l'autre : chacun ne pouvant être activé que depuis une phase de conduite manuelle, sans possibilité de transition directe entre les deux.

On connait par le document DE 10 2007 062 698 un procédé et un dispositif de commande et/ou de régulation d'un véhicule automobile, comprenant au moins un système d'assistance à la conduite pour assister le conducteur du véhicule, et au moins un système de conduite automatique. Les systèmes accèdent aux données d'au moins un capteur commun. En fonction de la tâche de conduite et/ou de l'environnement et/ou de la qualité des données de capteur, on passe automatiquement d'un système à l'autre, ou bien le conducteur du véhicule est informé de la possibilité de changer de système.

On connait aussi par le document DE 10 2006 058 412 un système d'assistance au conducteur et un procédé d'assistance au conducteur d'un véhicule pour la conduite. Le dispositif de commande peut être employé dans un mode d'assistance exclusivement lié à la voie, dans lequel l'assistance est réalisée sur la base de la voie momentanée détectée; dans un mode d'assistance exclusivement lié à l'objet, dans lequel l'assistance est réalisée sur la base de la voie d'objet détectée; et dans un mode d'assistance combiné correspondant à une combinaison du mode d'assistance lié à la voie et du mode d'assistance lié à l'objet.

On connait aussi par le document DE 10 2013 019 141 un procédé permettant de faire fonctionner un système d'assistance à la conduite d'un véhicule automobile. Le système d'assistance à la conduite, dans un mode de conduite autonome, met automatiquement en oeuvre une conduite du véhicule englobant à la fois une conduite longitudinale et une conduite transversale du véhicule automobile, et reçoit à cette occasion un signal de changement, lequel est configuré pour déclencher un passage du mode de conduite autonome à un autre mode de conduite prédéfini au cours duquel, dans le cas d'une utilisation conforme, un conducteur du véhicule automobile exécute au moins une partie de la conduite du véhicule.

### Objet et résumé de l'invention

La présente invention vise donc à améliorer la gestion des différents modes de conduite automatisée proposés par un tel système d'assistance à la conduite.

Elle propose à cet effet un procédé de pilotage d'un système automatisé d'assistance à la conduite d'un véhicule automobile proposant un premier mode de conduite entièrement automatisée à désengagement, en cas de non compatibilité du contexte de conduite avec la poursuite de ce premier dit mode, vers le mode de conduite manuel au terme d'une première phase de transition, et un deuxième mode de conduite entièrement automatisée à désengagement, en cas de non compatibilité du contexte de conduite avec la poursuite de ce deuxième mode, vers ledit mode de conduite manuel au terme d'une seconde phase de transition plus courte que ladite première phase de transition ; ledit procédé étant caractérisé en ce qu'il comporte successivement les étapes suivantes :
- détection, alors que ledit premier mode de conduite automatisée est activé, d'une dégradation du contexte de conduite ne permettant plus la poursuite de ce mode au-delà de ladite première phase de transition ;
- évaluation du niveau d'attention à la conduite du conducteur ;
- contrôle de la compatibilité du contexte de conduite avec la mise en œuvre dudit second mode de conduite automatisée et que ledit niveau d'attention soit supérieur ou égal à un seuil minimal prédéfini ; et
- activation directe dudit second mode de conduite automatisée sans passage par ledit mode de conduite manuelle, cette étape n'étant mise en œuvre que si ladite étape de contrôle est validée et sous réserve que ledit conducteur réalise en outre, dans un délai prédéterminé inférieur à ladite première phase de transition, une action traduisant sa volonté de passer vers ledit second mode de conduite automatisée.

Le procédé selon l'invention permet ainsi d'assurer, en toute sécurité et sous réserve que le conducteur en ait affirmé le souhait, une transition directe entre les deux modes de conduite automatisée sans passage obligé par une phase de conduite manuelle comme cela est le cas jusqu'à présent.

Selon des caractéristiques préférées de l'invention, prises seules ou en combinaison :
- ledit délai prédéterminé est compris entre 5 et 7 s ;
- ladite action traduisant la volonté dudit conducteur de passer vers ledit second mode de conduite automatisée consiste à appuyer sur la pédale d'accélération, sur le bouton d'activation dudit second mode de conduite automatisée, ou bien sur l'un des deux boutons d'ajustement à la hausse ou à la baisse de la vitesse de consigne que comportent ledit véhicule automobile ;
- ledit procédé comporte immédiatement après la validation de ladite étape de contrôle, une étape d'émission d'une première signalétique informative pendant ledit délai prédéterminé signalant audit conducteur l'interruption prochaine dudit premier mode de conduite automatisée et lui proposant s'il le souhaite d'activer directement ledit second mode de conduite automatisée ;
- ledit procédé comporte, au terme dudit délai prédéterminé lorsque ledit conducteur n'a pas effectué une dite action traduisant sa volonté de passer vers ledit second mode de conduite automatisée, une étape d'émission d'une signalétique d'alerte avertissant ledit conducteur sur la nécessité de reprendre en main le véhicule et courant jusqu'au terme de ladite première phase de transition ;
- ledit procédé comporte immédiatement après la non validation de ladite étape de contrôle, une étape d'émission pendant ledit délai prédéterminé d'une seconde signalétique informative signalant simplement audit conducteur l'interruption prochaine dudit premier mode de conduite automatisée afin qu'il se prépare à reprendre en mains le véhicule ;
- durant l'émission de la seconde signalétique informative, l'appui sur le bouton d'activation dudit second mode de conduite automatisée entraine directement son activation sous réserve que le contexte de conduite soit compatible avec sa mise en œuvre ;
- ledit procédé comporte, au terme dudit délai prédéterminé, une étape d'émission d'une signalétique d'alerte avertissant ledit conducteur de la nécessité de reprendre en main le véhicule et courant jusqu'au terme de ladite première phase de transition ;
- ladite première ou seconde signalétique informative comporte une composante visuelle comprenant l'affichage en continu d'un message textuel approprié sur au moins un écran dudit véhicule ; et/ou
- ladite première ou seconde signalétique informative comporte en outre une composante sonore consistant en l'émission d'un unique signal sonore ponctuel.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente un diagramme fonctionnel d'un système automatisé d'assistance à la conduite pour véhicule automobile ; et
- la figure 2 est un organigramme du procédé selon l'invention de pilotage de ce système automatisé d'assistance à la conduite.

### Description détaillée d'un mode préféré de réalisation

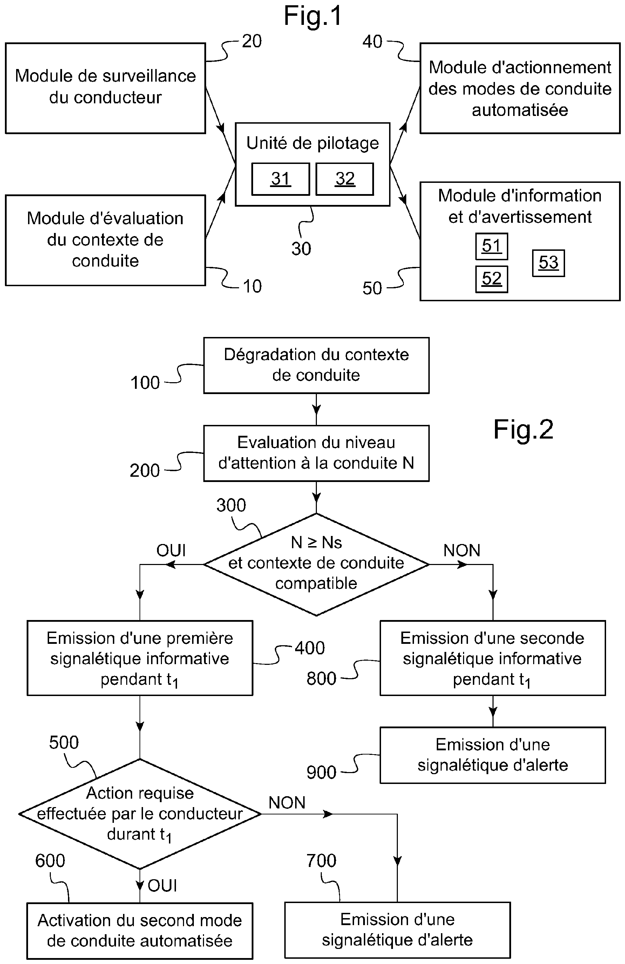

Le système d'assistance automatisée à la conduite représenté sur la figure 1 propose deux modes complémentaires de conduite entièrement automatisée du véhicule :
- un premier mode de type TJC permettant de délester entièrement le conducteur sur des routes à chaussées séparées dans des situations de trafic dense ou de bouchon (vitesse inférieure à 50/70 km/h), et à dégagement, en cas de non compatibilité du contexte de conduite avec la poursuite de ce mode, vers le mode de conduite manuel au terme d'une première phase de transition dite « longue » dont la durée est par exemple supérieure ou égale à 10 secondes ; et
- un second mode de type HAD permettant de délester entièrement le conducteur sur des routes à chaussées séparées mais sans restriction d'usage relatives à la vitesse du véhicule ou à la densité du trafic routier : le désengagement de ce premier mode de conduite automatisée intervenant, en cas de non compatibilité du contexte de conduite avec sa poursuite, vers le mode de conduite manuel au terme d'une seconde phase de transition dite « courte » dont la durée est moindre que celle de la première phase de transition et par exemple inférieure ou égale à 3 secondes.

En référence à cette figure 1, ce système d'assistance automatisée à la conduite comporte un module d'évaluation du contexte de conduite 10, un module de surveillance du conducteur 20, une unité de pilotage 30, un module d'actionnement des modes de conduite automatisée 40, ainsi qu'un module d'information et d'avertissement 50.

Le module d'évaluation du contexte de conduite 10 comporte des moyens d'acquisition vidéo (par exemple, une caméra de type CCD orientée vers l'avant du véhicule) délivrant des images permettant de déterminer le type de route empruntée (autoroute, voie rapide ou bien route secondaire) à partir de certains paramètres caractéristiques tels que la largeur de la voie, le marquage au sol (couleur, largeur et espacement des lignes) et la présence éventuelle d'une barrière ou d'un terre-plein central de séparation entre les deux sens de circulation. L'analyse des images fournies par ces moyens d'acquisition vidéo permet en outre d'établir le niveau de fluidité du trafic routier.

Le module 10 comprend également une pluralité de capteurs mesurant certains paramètres internes de conduite tels que la vitesse instantanée du véhicule et l'angle de braquage du volant.

Ce module 10 comporte en outre un détecteur de pluie doté d'un capteur de type optique ou capacitif intégré par exemple à la partie supérieure du pare-brise, ainsi qu'une cartographie du réseau routier fournissant un certains nombre d'informations sur les prochains tronçons rencontrés par le véhicule (type de route, nombre de voies, degré de sinuosité, limites de vitesse, etc...).

Le module de surveillance du conducteur 20 est chargé d'évaluer son niveau d'attention à la conduite en fonction de certains paramètres tels que de la fréquence de ses regards orientés sur la route et l'activité qu'il est en train d'exercer (lecture d'un livre, écoute de musique ou bien encore visionnage d'un film).

Ces informations sont obtenues par traitement et croisement des données reçues via :
- le dispositif d'info-divertissement du véhicule auquel le module 20 est relié et qui l'informe de la fonction actuellement activée sur ce dispositif ou sur un appareil électronique nomade de type Smartphone ou tablette tactile lui étant connecté (lecture d'une vidéo, conversation téléphonique, écoute de musique, etc..) ; et
- des moyens d'acquisition vidéo orientés vers le conducteur et aptes à surveiller son regard, à identifier les objets utilisés par ce dernier mais non connectés au dispositif d'info-divertissement (ordinateur portable, livre) ainsi que leur position par rapport à son visage (face à lui ou à contre son oreille).

Les données recueillies par les modules d'évaluation du contexte de conduite 10 et de surveillance du conducteur 20 sont acheminés en temps réel vers l'unité de pilotage 30 à laquelle ces modules sont reliés.

L'unité de pilotage 30 comporte un calculateur 31 ainsi qu'un module de stockage 32 comprenant de la mémoire non volatile de type EEPROM ou FLASH et de la mémoire vive.

Cette mémoire non volatile stocke notamment le procédé selon l'invention sous la forme d'un programme comprenant des lignes de commande et destiné à être mis en œuvre par ce calculateur.

L'unité de pilotage 30 est reliée au module d'actionnement 40 auquel elle est apte à transmettre l'ordre d'activer ou de désactiver l'un des modes d'assistance à la conduite.

Ce module d'actionnement 40 comporte une pluralité d'actionneurs aptes à contrôler certains organes du véhicule tels que la direction, l'accélération, le freinage et la boîte de vitesse pour assurer la mise en œuvre des deux modes de conduite entièrement automatisés que propose le système 1.

Le module d'information et d'avertissement 50 comporte un premier écran d'information 51 intégré de préférence au combiné d'instruments du véhicule et apte à diffuser des messages visuels à destination du conducteur.

Le module 50 comprend éventuellement un second écran 52 intégré à la console centrale de la planche de bord du véhicule (ce dernier étant constitué de préférence par l'écran d'affichage du dispositif d'info-divertissement) et destiné à afficher des messages visuels complémentaires tels que l'indication du mode de conduite automatisée éventuellement activé.

Ce module 50 est également doté d'une sirène 53 apte à émettre un signal acoustique d'alerte lorsque le conducteur doit reprendre en main le volant.

On va maintenant décrire en détails et à l'appui de l'organigramme de la figure 2, les différentes étapes du processus selon l'invention.

Celui-ci est initié lorsque le module 10 détecte, alors que le premier mode de conduite automatisée de type TJC est activé, une dégradation du contexte de conduite ne permettant plus la poursuite de ce mode au-delà de la première phase de transition dite « longue » (étape initiale 100). Tel est notamment le cas lorsque le trafic redevient fluide ou que le véhicule quitte une voie route à chaussées séparées.

Le processus évalue alors automatiquement, via le module 20, le niveau d'attention à la conduite N du conducteur (étape 200).

Le processus va ensuite contrôler si la situation d'espèce remplit simultanément les deux conditions préalables à la mise en œuvre du second mode de conduite automatisée de type HAD (étape 300).

La première condition porte sur le niveau d'attention estimé N du conducteur qui doit être supérieur ou égal à un seuil minimal prédéfini Ns.

La seconde condition est relative au contexte de conduite qui doit être compatible avec la mise en œuvre de ce second mode de conduite automatisé. Tel sera le cas en l'espèce si le véhicule demeure sur une route à chaussées séparées.

Si ces deux conditions sont remplies (étape de contrôle 300 validée), l'unité de pilotage 30 va demander au module d'information et d'avertissement 50 d'émettre immédiatement et pendant une durée prédéterminée t₁ inférieure à celle de la première phase de transition (de préférence égale à la moitié de cette dernière et/ou comprise entre 5 et 7 s), une première signalétique informative signalant au conducteur l'interruption prochaine du premier mode de conduite automatisée de type TJC et lui proposant s'il le souhaite d'activer directement le second mode de conduite automatisée de type HAD en réalisant une action traduisant cette volonté, cette action consistant en l'espèce à appuyer sur la pédale d'accélération ou sur le bouton d'activation de ce second mode de conduite automatisée ou encore sur l'un des deux boutons d'ajustement à la hausse ou à la baisse de la vitesse de consigne (étape 400).

Cette première signalétique informative comporte une composante visuelle comprenant l'affichage en continu d'un message textuel approprié (par exemple « Fin prochaine du premier mode de conduite automatique - Activation directe possible du second mode de conduite automatisée ») sur au moins un écran du véhicule (de préférence, sur l'écran 52 du système d'info-divertissement et/ou sur celui 51 du combiné d'instruments).

Elle peut éventuellement comporter en outre une composante sonore consistant en l'émission via la sirène 53 d'un unique signal sonore ponctuel destiné à interpeller le conducteur dont le regard n'est pas tourné vers l'un des écrans d'affichage du véhicule.

Pendant cette période t₁, le processus va vérifier si le conducteur effectue l'une requise des actions mentionnées ci-avant comme traduisant sa volonté de passer vers le second mode de conduite automatisée (étape 500).

Dans l'affirmative, l'unité de pilotage transmet au module d'actionnement 40 l'ordre d'activer instantanément le second mode de conduite automatisée de type HAD sans passage par le mode de conduite manuelle (étape 600).

Dans la négative, au terme de cette période t₁, l'unité de pilotage 30 va ordonner au module 50 d'émettre jusqu'au terme de la première phase de transition, une signalétique d'alerte avertissant le conducteur sur la nécessité de reprendre en main le véhicule (étape 700).

Revenons maintenant au niveau de l'étape de contrôle 300.

Si au moins l'une des deux conditions n'est pas vérifiée (étape 300 non validée), l'unité de pilotage 30 va alors demander au module d'information et d'avertissement 50 d'émettre immédiatement et pendant la durée prédéterminée t₁, une seconde signalétique informative signalant simplement au conducteur l'interruption prochaine du premier mode de conduite automatisée de type TJC afin qu'il se prépare à reprendre en mains le véhicule (étape 800).

Cette seconde signalétique informative comporte une composante visuelle comprenant l'affichage en continu d'un message textuel approprié (par exemple « Fin prochaine du premier mode de conduite automatique - Préparez-vous à reprendre en mains le véhicule ») sur au moins un écran du véhicule (de préférence, sur l'écran du système d'info-divertissement 52 et/ou sur celui du combiné d'instruments 51).

Elle peut éventuellement comporter en outre une composante sonore consistant en l'émission via la sirène 53 d'un unique signal sonore ponctuel destiné à interpeller le conducteur dont le regard n'est pas tourné vers l'un des écrans d'affichage du véhicule.

Au terme de cette période t₁, l'unité de pilotage 30 va ordonner au module 50 d'émettre jusqu'au terme de la première phase de transition, une signalétique d'alerte avertissant le conducteur de la nécessité de reprendre en main le véhicule (étape 900).

On pourrait par exemple prévoir, durant l'émission de la seconde signalétique informative, que l'appui sur le bouton d'activation du second mode de conduite automatisée de type HAD entraine également directement son activation sous réserve que le contexte de conduite soit compatible avec sa mise en œuvre.

## Revendications

1. Procédé de pilotage d'un système automatisé d'assistance à la conduite d'un véhicule automobile proposant un premier mode de conduite entièrement automatisée à désengagement, en cas de non compatibilité du contexte de conduite avec la poursuite de ce premier dit mode, vers le mode de conduite manuel au terme d'une première phase de transition, et un deuxième mode de conduite entièrement automatisée à désengagement, en cas de non compatibilité du contexte de conduite avec la poursuite de ce deuxième mode, vers ledit mode de conduite manuel au terme d'une seconde phase de transition plus courte que ladite première phase de transition ; ledit procédé étant **caractérisé en ce qu'**il comporte successivement les étapes suivantes :
- détection, alors que ledit premier mode de conduite automatisée est activé, d'une dégradation du contexte de conduite ne permettant plus la poursuite de ce mode au-delà de ladite première phase de transition (100) ;
- évaluation du niveau d'attention à la conduite du conducteur (200) ;
- contrôle de la compatibilité du contexte de conduite avec la mise en œuvre dudit second mode de conduite automatisée et que ledit niveau d'attention soit supérieur ou égal à un seuil minimal prédéfini (300) ; et
- activation directe dudit second mode de conduite automatisée sans passage par ledit mode de conduite manuelle (600), cette étape n'étant mise en œuvre que si ladite étape de contrôle (300) est validée et sous réserve que ledit conducteur réalise en outre, dans un délai prédéterminé (t₁) inférieur à ladite première phase de transition, une action traduisant sa volonté de passer vers ledit second mode de conduite automatisée (500).

2. Procédé de pilotage d'un système automatisé d'assistance à la conduite selon la revendication 1, **caractérisé en ce que** ledit délai prédéterminé (t₁) est compris entre 5 et 7 s.

3. Procédé de pilotage d'un système automatisé d'assistance à la conduite selon l'une des revendications 1 ou 2, **caractérisé en ce que** ladite action traduisant la volonté dudit conducteur de passer vers ledit second mode de conduite automatisée consiste à appuyer sur la pédale d'accélération, sur le bouton d'activation dudit second mode de conduite automatisée, ou bien sur l'un des deux boutons d'ajustement à la hausse ou à la baisse de la vitesse de consigne que comportent ledit véhicule automobile.

4. Procédé de pilotage d'un système automatisé d'assistance à la conduite selon l'une des revendications 1 à 3, **caractérisé en ce qu'**il comporte immédiatement après la validation de ladite étape de contrôle (300), une étape d'émission d'une première signalétique informative pendant ledit délai prédéterminé signalant audit conducteur l'interruption prochaine dudit premier mode de conduite automatisée et lui proposant s'il le souhaite d'activer directement ledit second mode de conduite automatisée (400).

5. Procédé de pilotage d'un système automatisé d'assistance à la conduite selon la revendication 4, **caractérisé en ce qu'**il comporte, au terme dudit délai prédéterminé (t₁) lorsque ledit conducteur n'a pas effectué une dite action traduisant sa volonté de passer vers ledit second mode de conduite automatisée, une étape d'émission d'une signalétique d'alerte avertissant ledit conducteur sur la nécessité de reprendre en main le véhicule et courant jusqu'au terme de ladite première phase de transition (700).

6. Procédé de pilotage d'un système automatisé d'assistance à la conduite selon l'une des revendications 1 à 3, **caractérisé en ce qu'**il comporte immédiatement après la non validation de ladite étape de contrôle (300), une étape d'émission pendant ledit délai prédéterminé d'une seconde signalétique informative signalant simplement audit conducteur l'interruption prochaine dudit premier mode de conduite automatisée afin qu'il se prépare à reprendre en mains le véhicule (800).

7. Procédé de pilotage d'un système automatisé d'assistance à la conduite selon la revendication 6, **caractérisé en ce que**, durant l'émission de la seconde signalétique informative, l'appui sur le bouton d'activation dudit second mode de conduite automatisée entraine directement son activation sous réserve que le contexte de conduite soit compatible avec sa mise en œuvre.

8. Procédé de pilotage d'un système automatisé d'assistance à la conduite selon la revendication 5, **caractérisé en ce qu'**il comporte, au terme dudit délai prédéterminé (t₁), une étape d'émission d'une signalétique d'alerte avertissant ledit conducteur de la nécessité de reprendre en main le véhicule et courant jusqu'au terme de ladite première phase de transition (900).

9. Procédé de pilotage d'un système automatisé d'assistance à la conduite selon la revendication 5, **caractérisé en ce que** ladite première signalétique informative comporte une composante visuelle comprenant l'affichage en continu d'un message textuel approprié sur au moins un écran dudit véhicule.

10. Procédé de pilotage d'un système automatisé d'assistance à la conduite selon la revendication 6, **caractérisé en ce que** ladite seconde signalétique informative comporte une composante visuelle comprenant l'affichage en continu d'un message textuel approprié sur au moins un écran dudit véhicule.

11. Procédé de pilotage d'un système automatisé d'assistance à la conduite selon l'une des revendications 4 à 9, **caractérisé en ce que** ladite première signalétique informative comporte en outre une composante sonore consistant en l'émission d'un unique signal sonore ponctuel.

12. Procédé de pilotage d'un système automatisé d'assistance à la conduite selon l'une des revendications 6 ou 10, **caractérisé en ce que** ladite seconde signalétique informative comporte en outre une composante sonore consistant en l'émission d'un unique signal sonore ponctuel.

## Patentansprüche

1. Verfahren zum Steuern eines automatisierten Fahrerassistenzsystems eines Kraftfahrzeugs, das einen ersten vollautomatisierten Fahrmodus mit, in dem Fall der Unverträglichkeit des Fahrkontexts mit der Fortsetzung dieses ersten Modus zu dem manuellen Modus nach einer ersten Übergangsphase, Übergehen vorschlägt, und einen zweiten vollautomatisierten Fahrmodus mit, in dem Fall der Unverträglichkeit des Fahrkontexts mit der Fortsetzung dieses zweiten Modus, Übergehen zu dem manuellen Modus nach einer zweiten Übergangsphase, die kürzer ist als die erste Übergangsphase; Verfahren **dadurch gekennzeichnet, dass** es sukzessive die folgenden Schritte umfasst:
- Erfassen, während der erste automatisierte Fahrmodus aktiviert ist, einer Verschlechterung des Fahrkontexts, die das Fortsetzen dieses Modus über die erste Übergangsphase (100) hinaus nicht mehr erlaubt;
- Bewerten des Aufmerksamkeitsniveaus des Fahrers für das Fahren (200);
- Prüfen der Verträglichkeit des Fahrkontexts mit der Umsetzung des zweiten automatisierten Fahrmodus, und dass das Aufmerksamkeitsniveau höher oder gleich einem vordefinierten Mindestschwellenwert ist (300); und
- direktes Aktivieren des zweiten automatisierten Fahrmodus ohne Passage durch den manuellen Fahrmodus (600), wobei dieser Schritt nur umgesetzt wird, falls der Prüfschritt (300) validiert wird, und vorbehaltlich dessen, dass der Fahrer außerdem innerhalb einer vorbestimmten Frist (t₁), die kleiner ist als die erste Übergangsphase, eine Aktion ausführt, die seinen Willen kundtut, zu dem zweiten automatisierten Fahrmodus überzugehen (500).

2. Steuerverfahren eines automatisierten Fahrerassistenzsystems nach Anspruch 1, **dadurch gekennzeichnet, dass** die vorbestimmte Frist (t₁) zwischen 5 und 7 s liegt.

3. Steuerverfahren eines automatisierten Fahrerassistenzsystems nach einem der Ansprüche 1 oder 2, **dadurch gekennzeichnet, dass** die Aktion, die den Willen des Fahrers kundtut, zu dem zweiten automatisierten Fahrmodus überzugehen, darin besteht, auf das Gaspedal, auf den Aktivierungsknopf des zweiten automatisierten Fahrmodus oder auf einen der zwei Einstellknöpfe zur Steigerung oder zum Senken der Sollgeschwindigkeit, die das Kraftfahrzeug umfasst, zu drücken.

4. Steuerverfahren eines automatisierten Fahrerassistenzsystems nach einem der Ansprüche 1 bis 3, **dadurch gekennzeichnet, dass** es unmittelbar nach der Validierung des Prüfschritts (300) einen Schritt des Sendens einer ersten Informationssignaletik während der vorbestimmten Frist umfasst, die dem Fahrer die bevorstehende Unterbrechung des ersten automatisierten Fahrmodus meldet und ihm vorschlägt, ob er wünscht, den zweiten automatisierten Fahrmodus direkt zu aktivieren (400).

5. Steuerverfahren eines automatisierten Fahrerassistenzsystems nach Anspruch 4, **dadurch gekennzeichnet, dass** es nach der vorbestimmten Frist (t₁), wenn der Fahrer die Aktion nicht ausgeführt hat, die seinen Willen kundtut, zu dem zweiten automatisierten Fahrmodus überzugehen, einen Schritt des Sendens einer Warnsignaletik umfasst, die den Fahrer über die Notwendigkeit warnt, die Kontrolle über das Fahrzeug wieder zu übernehmen, und die bis zum Ablaufen der ersten Übergangsphase (700) läuft.

6. Steuerverfahren eines automatisierten Fahrerassistenzsystems nach einem der Ansprüche 1 bis 3, **dadurch gekennzeichnet, dass** es unmittelbar nach der Nichtvalidierung des Prüfschritts (300) einen Schritt des Sendens während der vorbestimmten Frist einer zweiten Informationssignaletik umfasst, die dem Fahrer einfach die bevorstehende Unterbrechung des ersten automatisierten Fahrmodus meldet, damit er sich darauf vorbereitet, die Kontrolle des Fahrzeugs wieder zu übernehmen (800).

7. Steuerverfahren eines automatisierten Fahrerassistenzsystems nach Anspruch 6, **dadurch gekennzeichnet, dass** während des Sendens der zweiten Informationssignaletik das Drücken auf den Aktivierungsknopf des zweiten automatisierten Fahrmodus dessen Aktivierung direkt unter der Voraussetzung nach sich zieht, dass der Fahrkontext mit seiner Umsetzung vereinbar ist.

8. Steuerverfahren eines automatisierten Fahrerassistenzsystems nach Anspruch 5, **dadurch gekennzeichnet, dass** es nach der vorbestimmten Frist (t₁) einen Schritt des Sendens einer Warnsignaletik umfasst, die den Fahrer über die Notwendigkeit warnt, die Kontrolle des Fahrzeugs wieder zu übernehmen, und die bis zum Ablaufen der ersten Übergangsphase läuft (900).

9. Steuerverfahren eines automatisieren Fahrerassistenzsystems nach Anspruch 5, **dadurch gekennzeichnet, dass** die erste Informationssignaletik eine visuelle Komponente umfasst, die das kontinuierliche Anzeigen einer zweckdienlichen Textnachricht auf mindestens einem Bildschirm des Fahrzeugs umfasst.

10. Steuerverfahren eines automatisieren Fahrerassistenzsystems nach Anspruch 6, **dadurch gekennzeichnet, dass** die zweite Informationssignaletik eine visuelle Komponente umfasst, die das kontinuierliche Anzeigen einer zweckdienlichen Textnachricht auf mindestens einem Bildschirm des Fahrzeugs umfasst.

11. Steuerverfahren eines automatisierten Fahrerassistenzsystems nach einem der Ansprüche 4 bis 9, **dadurch gekennzeichnet, dass** die erste Informationssignaletik außerdem eine akustische Komponente umfasst, die aus dem Abgeben eines punktuellen einzigen akustischen Signals besteht.

12. Steuerverfahren eines automatisierten Fahrerassistenzsystems nach einem der Ansprüche 6 bis 10, **dadurch gekennzeichnet, dass** die zweite Informationssignaletik außerdem eine akustische Komponente umfasst, die aus dem Abgeben eines punktuellen einzigen akustischen Signals besteht.

## Claims

1. A method for controlling an automated driving assistance system of a motor vehicle proposing a first fully automated driving mode for disengagement, in the case of non-compatibility of the driving context with the continuation of this first said mode, to the manual driving mode at the end of a first transition phase, and a second fully automated driving mode for disengagement, in the case of non-compatibility of the driving context with the continuation of this second mode, to said manual driving mode at the end of a second transition phase shorter than said first transition phase; said method being **characterized in that** it comprises successively the following steps:
- detection, while said first automated driving mode is activated, of a degradation of the driving context no longer permitting the continuation of this mode beyond said first transition phase (100);
- evaluation of the attention level to driving of the driver (200);
- monitoring of the compatibility of the driving context with the implementation of said second automated driving mode and that said level of attention is greater than or equal to a predefined minimum threshold (300); and
- direct activation of said second automated driving mode without passing through said manual driving mode (600), this step only being implemented if said monitoring step (300) is validated and as long as said driver further performs, within a predetermined amount of time (t₁) less than said first transition phase, an action demonstrating his wish to pass to said second automated driving mode (500).

2. The method for controlling an automated driving assistance system according to Claim 1, **characterized in that** said predetermined time duration (t₁) is comprised between 5 and 7 s.

3. The method for controlling an automated driving assistance system according to one of Claims 1 or 2, **characterized in that** said action demonstrating the wish of said driver to pass to said second automated driving mode consists in pressing on the accelerator pedal, on the activation button of said second automated driving mode, or on one of the two upward or downward adjustment buttons of the speed setpoint comprised by said motor vehicle.

4. The method for controlling an automated driving assistance system according to one of Claims 1 to 3, **characterized in that** it comprises immediately after the validation of said monitoring step (300) a step of emission of a first informative signalling during said predetermined time duration, indicating to said driver the upcoming interruption of said first automated driving mode and proposing to him, if he wishes, to directly activate said second automated driving mode (400) .

5. The method for controlling an automated driving assistance system according to Claim 4, **characterized in that** it comprises, at the end of said predetermined time duration (t₁) when said driver has not carried out a said action demonstrating his wish to pass to said second automated driving mode, a step of emission of a warning signalling, warning said driver of the necessity to take back control of the vehicle and running up to the end of said first transition phase (700) .

6. The method for controlling an automated driving assistance system according to one of Claims 1 to 3, **characterized in that** it comprises immediately after the non-validation of said monitoring step (300), a step of emission during said predetermined time duration of a second informative signalling, simply indicating to said driver the upcoming interruption of said first automated driving mode, so that he prepares to take back control of the vehicle (800).

7. The method for controlling an automated driving assistance system according to Claim 6, **characterized in that**, during the emission of the second informative signalling, the pressing on the activation button of said second automated driving mode directly causes its activation as long as the driving context is compatible with its implementation.

8. The method for controlling an automated driving assistance system according to Claim 5, **characterized in that** it comprises, at the end of said predetermined time duration (t₁), a step of emission of a warning signalling, warning said driver of the necessity to take back control of the vehicle and running up to the end of said first transition phase (900).

9. The method for controlling an automated driving assistance system according to Claim 5, **characterized in that** said first informative signalling comprises a visual component including the continuous display of an appropriate textual message on at least one screen of said vehicle.

10. The method for controlling an automated driving assistance system according to Claim 6, **characterized in that** said second informative signalling comprises a visual component including the continuous display of an appropriate textual message on at least one screen of said vehicle.

11. The method for controlling an automated driving assistance system according to one of Claims 4 to 9, **characterized in that** said first informative signalling further comprises a sound component consisting of the emission of a single punctual sound signal.

12. The method for controlling an automated driving assistance system according to one of Claims 6 or 10, **characterized in that** said second informative signalling further comprises a sound component consisting of the emission of a single punctual sound signal.
